# EUROPÄISCHE PATENTSCHRIFT

(11) **EP 2 272 802 B1**
(45) Veröffentlichungstag und Bekanntmachung des Hinweises auf die Patenterteilung: **23.03.2016**
(21) Anmeldenummer: 10166895.2
(22) Anmeldetag: 22.06.2010
(51) Int. Cl.: C02F 103/02, C02F 1/44, C02F 1/00, C02F 1/42

(54) **Verwendung einer Vorrichtung zur Behandlung von Zulaufwasser eines Wasserkreislauf**
Use of a device for processing feed water from a water cycle
Utilisation d'un dispositif de traitement d'eau d'alimentation d'un circuit d'eau

(30) Priorität: 24.06.2009 DE 102009027144
(43) Veröffentlichungstag der Anmeldung: 12.01.2011
(73) Patentinhaber: Judo Wasseraufbereitung GmbH, 71364 Winnenden (DE)
(72) Erfinder: Söcknick, Ralf, 70806, Kornwestheim (DE); Dopslaff, Carsten, 71364, Winnenden (DE)
(74) Vertreter: Kohler Schmid Möbus Patentanwälte

(56) Entgegenhaltungen:
- DE-A1- 4 028 529
- FR-A1- 2 902 342
- US-A- 4 659 460
- US-A1- 2002 117 431
- US-A1- 2008 277 344

## Beschreibung

Die Erfindung betrifft eine Verwendung einer Wasserbehandlungs-Vorrichtung, umfassend mehrere Wasserbehandlungsstränge, mit denen zulaufendes Wasser einer Wasserbehandlungsfunktion unterzogen werden kann, wobei die Wasserbehandlungsstränge bezüglich des Flusses von zulaufendem Wasser parallel zueinander angeschlossen sind, und wobei Schaltmittel vorhanden sind, mit denen ein Wasserbehandlungsstrang für eine Wasserbehandlung auswählbar ist, wobei die übrigen Wasserbehandlungsstränge für einen Wasserdurchfluss gesperrt sind.

Eine entsprechende Vorrichtung ist aus der US 4,659,460 bekannt geworden.

Aus der DE 10 2005 036 356 B4 ist weiterhin eine Wasserbehandlungseinrichtung für eine Heizanlage mit einem Wasserbehandlungsstrang bekannt geworden.

Unbehandeltes Trinkwasser ist für den Einsatz als Füllwasser für einen Heiz- oder Kühlkreislauf nur begrenzt einsetzbar. Zu den klassischen Schäden in Heiz- oder Kühlkreisläufen gehören Steinbildung und Korrosion. Diese können durch Wechselwirkungen des Wassers mit den Werkstoffen des Heiz- oder Kühlkreislaufs entstehen. Folgen solcher Beschädigungen sind die Beeinträchtigung des Wärmeübergangs verbunden mit einer Erhöhung des Energieverbrauchs, Erhöhung des Strömungswiderstandes durch Querschnittsminderungen, Funktionsbeeinträchtigung und Verstopfung von Regel- und Thermostatventilen sowie Leckagen. Um Schäden zu vermeiden wird das Wasser bei der Befüllung von Heiz- oder Kühlkreisläufen behandelt.

Die aus der DE 10 2005 036 356 B4 vorbekannte Vorrichtung umfasst einen Behälter mit einem Zu- und einem Ablauf. In dem Behälter sind eine erste und eine zweite Kammer vorgesehen, wobei jede Kammer unterschiedliche Wasserbehandlungselemente aufweist. Beide Wasserbehandlungselemente stehen in strömungsleitender Verbindung. Die erste Kammer weist einen Ionentauscher auf, der das zu behandelnde Wasser entmineralisiert und einen pH- Wert zwischen 8,5 und 10,5 einstellt. In der zweiten Kammer befinden sich Korrosionsschutzmittel in Tablettenform, die chemischen Bestandteile an das Wasser abgeben. Darüber hinaus sind im Bereich des Zu- und Ablaufs Filter angebracht. Diese vorbekannte Vorrichtung ermöglicht nur eine teure Entmineralisierung, auch wenn eine günstigere Enthärtung des zu behandelten Wassers, d.h. ein Austausch der Härtebildner (Ca- und Mg-Ionen) gegen Na-Ionen, ausreichend wäre.

Die US 4,659,460 beschreibt eine mobile Fluid-Reinigungsanlage. Auf einem Gestell sind mehrere Behandlungstanks angeordnet, die abhängig vom Rüstzustand seriell, parallel oder in einer Kombination von seriell und parallel betrieben werden können. Behandlungstanks mit derselben Behandlungsfunktion werden dabei parallel geschaltet, und verschiedene Behandlungsfunktionen in Serie.

Die FR 2 902 342 beschreibt ein Verfahren und eine Vorrichtung zur Reinigung von Wasser in einem Kühlkreislauf.

Die DE 40 28 529 A1 beschreibt einen Trinkwasseraufbereiter für Haushalts-Wasserstellen mit mehreren Filtereinsätzen, die elektrisch steuerbar und überwachbar sind.

### Aufgabe der Erfindung

Es ist die Aufgabe der vorliegenden Erfindung, eine flexible, auf die vorliegende Wasserqualität oder die Anforderungen des zu befüllenden Wasserkreislaufs abgestimmte Wasserbehandlung zu ermöglichen.

### Kurze Beschreibung der Erfindung

Diese Aufgabe wird gelöst durch die Verwendung einer Wasserbehandlungs-Vorrichtung der eingangs genannten Art, die dadurch gekennzeichnet ist, dass die Vorrichtung zur Behandlung von Zulaufwasser eines Wasserkreislaufs, mit dem der Wasserkreislauf befüllt wird, verwendet wird,
wobei ein Wasserbehandlungsstrang von zu behandelndem Wasser durchflossen wird, und die übrigen Wasserbehandlungsstränge von dem zu behandelnden Wasser getrennt sind,
und wobei jeder Wasserbehandlungsstrang eine unterschiedliche Wasserbehandlungsfunktion aufweist.

Die Vorrichtung wird erfindungsgemäß zur Behandlung von Zulaufwasser für einen Wasserkreislauf eingesetzt, etwa um Steinbildung und Korrosion zu vermeiden. Dazu wird die Vorrichtung an ein lokales Wasserversorgungssystem, etwa das Trinkwassernetz, angeschlossen.

Die Vorrichtung weist mehrere Wasserbehandlungsstränge auf, wobei jedem Wasserbehandlungsstrang eine unterschiedliche Wasserbehandlungsfunktion zugeordnet ist. Dabei kann beispielsweise mit einem ersten Wasserbehandlungsstrang eine Teil- oder Vollentsalzung des zu behandelnden Wassers vorgenommen werden, während ein zweiter Wasserbehandlungsstrang eine Enthärtung des Wassers ermöglicht.

Zur Vermeidung von Steinbildung kann eine einfache Enthärtung des zu behandelnden Wassers erfolgen. Korrosion kann mittels einer Teil- oder Vollentsalzung verhindert werden. Die Teil- oder Vollentsalzung bewirkt auch eine Enthärtung des Wassers, ist aber im Vergleich zur reinen Enthärtung aufwendiger und teurer. Deshalb sollte für jeden Anwendungsfall gesondert geprüft werden, ob eine Teil- oder Vollentsalzung erforderlich ist.

Die Vorrichtung kann durch die zur Wahl stehenden, unterschiedlichen Wasserbehandlungsstränge an lokale Verhältnisse angepasst werden und dadurch eine optimale und auch kostengünstige Wasserbehandlung gewährleisten.

Die Auswahl eines Wasserbehandlungsstrangs erfolgt mittels Schaltmitteln. Ein ausgewählter Wasserbehandlungsstrang wird von zu behandelndem Wasser durchströmt, während die übrigen Wasserbehandlungsstränge gesperrt sind. Die Schaltmittel können manuell oder auch elektrisch betrieben werden, wodurch ein anwenderfreundliches Bedienen der Vorrichtung gewährleistet ist.

Gemäß der vorliegenden Erfindung wird die oben beschriebene Vorrichtung zur Befüllung eines Wasserkreislaufs, insbesondere Kühl- oder Heizkreislaufs, mit Wasser verwendet. Bevorzugt informiert sich der Bediener vor oder bei Inbetriebnahme der Vorrichtung über die Qualität des zu behandelnden Wassers. Dies kann beispielsweise durch eine oder mehrere Messungen der Wasserqualität erfolgen, oder durch Einholung von Auskünften beim Wasserversorger. Darüber hinaus werden bevorzugt die Anforderungen des zu befüllenden Kreislaufs an das behandelte (einzufüllende) Wasser definiert. Diese können sich bezogen auf unterschiedliche Kreislaufsysteme erheblich unterscheiden (insbesondere zwischen Heiz- und Kühlkreisläufen). Der Bediener trifft, bevorzugt basierend auf der ermittelten Wasserqualität und den definierten Anforderungen, eine Auswahlentscheidung. Er entscheidet, welcher Wasserbehandlungsstrang für die vorliegende Wasserbehandlung eingesetzt werden soll. Es ist möglich, diese Auswahlentscheidung elektronisch, beispielsweise durch die Überwachungseinrichtung, zu unterstützen, die aufgrund von Messwerten einen Wasserbehandlungsstrang vorschlagen kann. Indem der Bediener die Möglichkeit hat, einen Wasserbehandlungsstrang auszuwählen, kann die Wasserbehandlung auf die lokal am Einsatzort vorliegenden Bedürfnisse angepasst werden. Damit ist die Vorrichtung universell einsetzbar und ermöglicht aufgrund der individuellen Anpassungsfähigkeit insbesondere auch eine kostenoptimierte Wasserbehandlung.

### Bevorzugte Varianten der Erfindung

Bevorzugt ist eine Variante der erfindungsgemäßen Verwendung, bei der die Vorrichtung als eine als Ganzes mobile Behandlungsgruppe ausgebildet ist. Die Vorrichtung kann so auf einfache Art und Weise zu unterschiedlichen Anwendungsorten transportiert werden. In der Regel sind sämtliche Behälter mit Anschlusstechnik, Durchflussmesser und elektronischer Steuereinrichtung auf einer fahrbaren Vorrichtung (z. B. eine Sackkarre oder ein Rollwagen) montiert. Es können dann leicht mehrere Wasserbehandlungsstränge mit unterschiedlichen Wasserbehandlungsfunktionen zur Verfügung gestellt werden, so dass direkt vor Ort entschieden werden kann, welche Wasserbehandlung im konkreten Fall optimal ist.

Eine vorteilhafte Variante sieht vor, dass jeder Wasserbehandlungsstrang ein oder mehrere Wasserbehandlungselemente aufweist, wobei jedes Wasserbehandlungselement eine Einzelfunktion zur Wasserbehandlung aufweist. Im Falle nur eines Wasserbehandlungselements im Strang bestimmt dessen Einzelfunktion die Wasserbehandlungsfunktion dieses Stranges. Im Falle mehrerer Wasserbehandlungselemente in einem Strang ergeben die Einzelfunktionen der Wasserbehandlungselemente des Stranges insgesamt die Wasserbehandlungsfunktion des Stranges. Mehrere Wasserbehandlungselemente in einem Strang sind typischerweise in Serie zueinander verbunden. Beispielsweise können im selben Strang eine pH-Puffereinrichtung und ein Ionentauscher angeordnet sein. Werden mehrere Wasserbehandlungselemente pro Wasserbehandlungsstrang verwendet, können mehrstufige Wasserbehandlungen eines Wasserbehandlungsstrangs realisiert werden.

In einer Weiterbildung dieser Variante ist für jeden Wasserbehandlungsstrang ein eigener Behälter vorgesehen, in welchem alle Wasserbehandlungselemente des jeweiligen Wasserbehandlungstanges angeordnet sind. Dies ermöglicht eine kompakte Bauweise. Alternativ sind auch getrennte Behälter für die verschiedenen Wasserbehandlungselemente eines Wasserbehandlungsstrangs möglich.

Ebenfalls bevorzugt ist eine Weiterbildung der obigen Variante, die vorsieht, dass ein oder mehrere Wasserbehandlungselemente ausgebildet sind als
- Siebfilter oder
- Enthärtungseinrichtung, insbesondere mit einem Kationentauscher in Na-Form oder mit einer Nanofiltrationsmembran, oder
- Entsalzungseinrichtung, insbesondere mit einer Umkehrosmosemembran oder einer Mischung aus Kationen- und Anionentauschern, oder
- Teilentsalzungseinrichtung, insbesondere mit einem Kationentauscher in H-Form oder
- pH-Puffereinrichtung, oder
- Inhibitordosiereinrichtung.

Durch diese Wasserbehandlungselemente können die regelmäßig auftretenden Wasserbehandlungsanforderungen für Zulaufwasser von Wasserkreisläufen gut erfüllt werden.

Vorteilhaft ist auch eine Variante, die vorsieht, dass die Schaltmittel einen Mehrwegehahn, insbesondere einen Dreiwegehahn oder Vierwegehahn umfassen. Diese Schaltmittel sind einfach zu bedienen und weisen einen geringen Platzbedarf auf.

Besonders bevorzugt ist weiterhin eine Variante der erfindungsgemäßen Verwendung, die dadurch gekennzeichnet ist, dass eine Stranganzeige vorgesehen ist, durch die der oder die ausgewählten Wasserbehandlungsstränge anzeigbar sind. Damit kann kontrolliert werden, durch welchen Wasserbehandlungsstrang das Wasser momentan fließt und somit welche Wasserbehandlung aktuell durchgeführt wird. Nicht erwünschte Wasserbehandlungen werden vermieden. Die Anzeige kann beispielsweise mittels eines Displays oder mittels eines für den jeweiligen Wasserbehandlungsstrang charakteristischen Lichtsignals erfolgen.

Eine weitere Variante der erfindungsgemäßen Verwendung sieht vor, dass mindestens ein Durchflussmesser zur Bestimmung des Flusses an behandeltem Wasser vorgesehen ist. Da nur jeweils ein Strang gleichzeitig ausgewählt ist, genügt ein Durchflussmesser für alle Stränge, beispielsweise im Bereich des Zulaufs. Der Durchflussmesser ermittelt Daten, die für die Berechnung der Restkapazität der Wasserbehandlungsstränge bzw. der zugehörigen Wasserbehandlungselemente genutzt werden können.

Ebenfalls besonders bevorzugt ist eine Variante, bei der ein Zulaufsensor im Bereich eines Zulaufs der Vorrichtung zur Messung der Leitfähigkeit und/oder der Härte des zu behandelten Wassers vorgesehen ist. Die Qualität des zu behandelnden Wassers ist je nach Standort des Heiz- oder Kühlkreislaufs verschieden. Durch Messung der Leitfähigkeit und/oder der Härte des zu behandelnden Wassers kann die verbleibende Restkapazität unter Berücksichtigung der vorliegenden Wasserqualität ermittelt und damit der Erschöpfungsgrad der Wasserbehandlungselemente sehr genau bestimmt werden.

Bevorzugt ist auch eine Variante, bei der ein Ablaufsensor im Bereich des Ablaufs der Vorrichtung zur Messung der Leitfähigkeit und/oder der Härte des behandelten Wassers vorgesehen ist. Mittels des Ablaufsensors kann der Erfolg der Wasserbehandlung kontrolliert werden. Beispielsweise kann durch die Bestimmung der Leitfähigkeit des behandelten Wassers kontrolliert werden, ob eine Teil- bzw. Vollentsalzung ordnungsgemäß durchgeführt wird; ein ansteigender Wert signalisiert die Erschöpfung der Wasserbehandlungselemente.

Bei einer weiteren, bevorzugten Variante ist ein Verschlussorgan zur Unterbrechung des Abflusses von behandeltem Wasser vorgesehen. Das Verschlussorgan ist typischerweise im Bereich des Ablaufs der Vorrichtung angeordnet. Es ist auch möglich, für jeden Strang ein eigenes Verschlussorgan vorzusehen, typischerweise jeweils nach den jeweiligen Wasserbehandlungselementen. Durch die Verwendung eines Verschlussorgans kann vermieden werden, dass der Heiz- oder Kühlkreislauf mit unbehandeltem Wasser befüllt wird.

Bei einer Variante der erfindungsgemäßen Verwendung sind die Schaltmittel manuell betätigbar. Dies minimiert den Konstruktionsaufwand und reduziert aufgrund der einfachen Konstruktion auch die Störanfälligkeit.

Besonders bevorzugt ist eine Variante der erfindungsgemäßen Verwendung, bei der die Schaltmittel mit einem elektrischen Antrieb betätigbar sind. Typischerweise ist dann auch eine elektronische Eingabevorrichtung zur Auswahl der Schaltstellung der Schaltmittel vorgesehen. Ein elektrischer Antrieb der Schaltmittel in Kombination mit einer Eingabevorrichtung erhöht den Bedienkomfort. Weiterhin ermöglicht der elektrische Antrieb auch eine Ansteuerung der Schaltmittel im Zusammenspiel mit einer automatischen Steuer- oder Überwachungseinrichtung.

Bevorzugt ist auch eine Variante, bei der eine Überwachungseinrichtung zur Überwachung der Restkapazität eines oder mehrerer der Wasserbehandlungsstränge vorgesehen ist. Die Überwachungseinrichtung ermittelt selbstständig den Erschöpfungsgrad der Wasserbehandlungsstränge und ergreift typischerweise selbsttätig Maßnahmen (etwa eine Signalausgabe oder Steuerbefehle) in Abhängigkeit von dem Erschöpfungsgrad. Es werden bevorzugt sämtliche Daten, die die Restkapazität der einzelnen Wasserbehandlungsstränge (insbesondere Behälter) beeinflussen, berücksichtigt, so dass die Berechnung der Restkapazität für jeden Wasserbehandlungsstrang besonders genau ist. Ein Wasserbehandlungsstrang mit einer geringen Restkapazität kann rechtzeitig gewechselt werden, und/oder die erschöpften Wasserbehandlungselemente werden einer Regeneration unterzogen.

Bei einer bevorzugten Weiterbildung dieser Variante ist ein Signalgeber, insbesondere ein akustischer Signalgeber und/oder optischer Signalgeber und/oder Funksignalgeber zum Signalisieren der Erschöpfung der Restkapazität eines Wasserbehandlungsstrangs vorgesehen. Die Erschöpfung kann insbesondere dadurch festgestellt werden, dass eine berechnete Restkapazität des Wasserbehandlungsstrangs einen vorgegebenen Grenzwert unterschreitet. Ein Signal kann einerseits warnen, wenn nur noch eine geringe Restkapazität vorhanden ist; andererseits kann auch ein (typischerweise anderes) Signal den Anwender alarmieren, wenn die Restkapazität gleich Null ist und keine Wasserbehandlung mehr möglich ist. Die Signale können sich auch unterscheiden, je nachdem, welche Wasserbehandlungselemente eine zu geringe Restkapazität aufweisen.

Besonders bevorzugt ist weiterhin eine Weiterbildung der obigen Variante, die dadurch ausgezeichnet ist, dass eine Restkapazitätsanzeige für einen oder mehrere der Wasserbehandlungsstränge vorgesehen ist. Dies ermöglicht eine schnelle und klare Übersicht über den Zustand der einzelnen Wasserbehandlungsstränge (insbesondere Behälter). Die Anzeige gibt bevorzugt Auskunft, wie viel Wasser noch behandelt werden kann. Es kann alternativ oder zusätzlich angezeigt werden, wie viel Wasser bereits behandelt wurde.

Erfindungsgemäß ist weiterhin eine Weiterbildung der obigen Variante, wobei mittels der Überwachungseinrichtung die Restkapazität eines oder mehrere der Wasserbehandlungsstränge überwacht werden. Die Ermittlung der Restkapazität ermöglicht es, Maßnahmen bei erschöpften Wasserbehandlungssträngen einzuleiten. Dadurch können Befüllungen von Kreisläufen mit nicht korrekt behandeltem Wasser vermieden werden.

Bevorzugt ist eine Fortentwicklung hierzu, bei der die Restkapazität eines Wasserbehandlungsstrangs durch Messung der durch den Wasserbehandlungsstrang fließenden Wassermenge ermittelt wird. Eine vorgegebene Grundkapazität wird durch die behandelte Wassermenge, die in der Regel mit einem Durchflussmesser ermittelt wird, nach und nach erschöpft; durch die Messung der behandelten Wassermenge kann auf die verbleibende Restkapazität geschlossen werden. Am einfachsten wird dabei eine gewisse Qualität, insbesondere Leitfähigkeit und/oder Härtegrad, des zufließenden Wasser fest angenommen; diese Art der Bestimmung der Restkapazität lässt sich leicht realisieren, da der technische Aufwand gering ist.

Bevorzugt ist es dabei, wenn die Qualität, insbesondere Leitfähigkeit und/oder Härtegrad, des durch den Wasserbehandlungsstrang fließenden Wassers vor der Wasserbehandlung gemessen wird, und bei der Bestimmung der Restkapazität der gemessene Wasserfluss mittels der momentanen gemessenen Qualität gewichtet wird. Die Restkapazität, typischerweise ausgedrückt dadurch, wie viel Liter Wasser im konkreten Fall noch behandelt (z.B. enthärtet bzw. entsalzt) werden können, hängt von der Qualität (z.B. der Härte oder Leitfähigkeit) des zu behandelnden Wassers ab. Wird diese Qualität bei Berechnung der Restkapazitäten berücksichtigt, so ist es möglich, genau anzugeben, wie viel Liter des vorliegenden Wassers mit dem ausgewählten Wasserbehandlungsstrang noch behandelt werden können. Weiterhin kann die bereits verbrauchte Kapazität eines Wasserbehandlungsstrangs unter Berücksichtigung der (ursprünglichen) Qualität des bereits behandelten Wassers genauer ermittelt werden, wodurch die Bestimmung der Restkapazität ebenfalls genauer wird. Die Überwachungseinrichtung kann beispielsweise bei Bestimmung der Restkapazität eines bestimmten Wasserbehandlungsstrangs berücksichtigen, dass bisher 100 Liter der Härte 8°dH, 120 Liter der Härte 14°dH und 90 Liter der Härte 10°dH durch diesen Wasserbehandlungsstrang behandelt wurden. Die Messung der Qualität sollte zumindest bei jedem Anschluss der Vorrichtung an eine neue Wasserquelle erfolgen. Die Messung der Qualität kann auch weiterhin regelmäßig (etwa alle 10 Liter Wasserdurchfluss, oder alle 10 Minuten, oder auch kontinuierlich) erfolgen, und insbesondere auch mehrfach zwischen zwei Regenerationen eines Stranges.

Weiterhin kann vorgesehen sein, dass für jeden Wasserbehandlungsstrang die durchgeflossene Wassermenge separat aufsummiert wird. Naturgemäß unterscheidet sich der Erschöpfungsgrad der Wasserbehandlungselemente in den einzelnen Wasserbehandlungssträngen abhängig von der bereits durch den jeweiligen Wasserbehandlungsstrang geflossenen Wassermenge. Eine separate Aufsummierung der durchgeflossenen Wassermenge ermöglicht eine genaue Angabe der Restkapazität der jeweiligen Wasserbehandlungsstränge.

Bevorzugt ist des Weiteren eine Fortentwicklung, bei der eine erschöpfte Restkapazität eines Wasserbehandlungsstrang durch Messung der Qualität, insbesondere Leitfähigkeit und/oder Härte des behandelten Wassers, festgestellt wird. Im einfachsten Fall zeigt ein Härteanstieg im behandelten Wasser einen alsbald erschöpften Ionentauscher an. Beispielsweise kann auch durch die Bestimmung der Leitfähigkeit des behandelten Wassers kontrolliert werden, ob eine Teil- oder Vollentsalzung ordnungsgemäß durchgeführt wird. Man beachte, dass die Bestimmung der Härte im Ablaufwasser bevorzugt über eine ionenselektive Elektrode oder einen Titrator (und nicht über eine Leitfähigkeitsmessung) erfolgt.

Eine ebenfalls bevorzugte Fortentwicklung sieht vor, dass bei Erschöpfung der Restkapazität eines ausgewählten Wasserbehandlungsstrangs durch die Überwachungseinrichtung ein Warnsignal abgegeben wird. Der Bediener kann dann Maßnahmen ergreifen, etwa eine Regeneration einleiten. Die Erschöpfung der Restkapazität kann insbesondere dadurch ermittelt werden, dass eine berechnete Restkapazität einen Grenzwert unterschreitet. Dem Bediener der Vorrichtung bleibt dann noch ausreichend Zeit, um auf die Erschöpfung des Wasserbehandlungsstrangs zu reagieren, bevor eine vollständige Erschöpfung eingetreten ist und etwaig unbehandeltes Wasser in einen Kreislauf gefüllt wird.

Eine andere Fortentwicklung sieht vor, dass bei Erschöpfung der Restkapazität in einem ausgewählten Wasserbehandlungsstrang durch die Überwachungseiririchtung der bisherige Wasserbehandlungsstrang gesperrt wird und ein anderer, nicht erschöpfter Wasserbehandlungsstrang ausgewählt wird. Dadurch kann die Wasserbehandlung unterbrechungsfrei fortgesetzt werden. Typischerweise wird auf eine höherwertige, aber teurere Wasserbehandlung umgeschaltet.

Bei einer besonders bevorzugten Fortentwicklung wird bei Erschöpfung der Restkapazität in einem ausgewählten Wasserbehandlungsstrang durch die Überwachungseinrichtung der Wasserfluss durch diesen Wasserbehandlungsstrang, und bevorzugt auch durch die gesamte Vorrichtung, unterbrochen. Dadurch wird vermieden, dass unbehandeltes oder ungenügend behandeltes Wasser in den Heiz- oder Kühlkreislauf eingefüllt wird.

Eine Variante sieht vor, dass der Wasserkreislauf ein Kühl- oder Heizkreislauf ist. Mittels eines Kühl- oder Heizkreislaufs können Bereiche abgekühlt oder aufgeheizt werden. Die Vorrichtung ermöglicht dabei ein Befüllen des angeschlossenen Kreislaufs mit behandeltem Wasser, wobei die Art der Wasserbehandlung an die jeweiligen Anforderungen des Kreislaufs und an die Qualität des lokal zur Verfügung stehenden Wassers angepasst werden können.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Zeichnung und detaillierte Beschreibung der Erfindung

Die Erfindung ist in der Zeichnung dargestellt und wird anhand von Ausführungsbeispielen näher erläutert. Es zeigt:

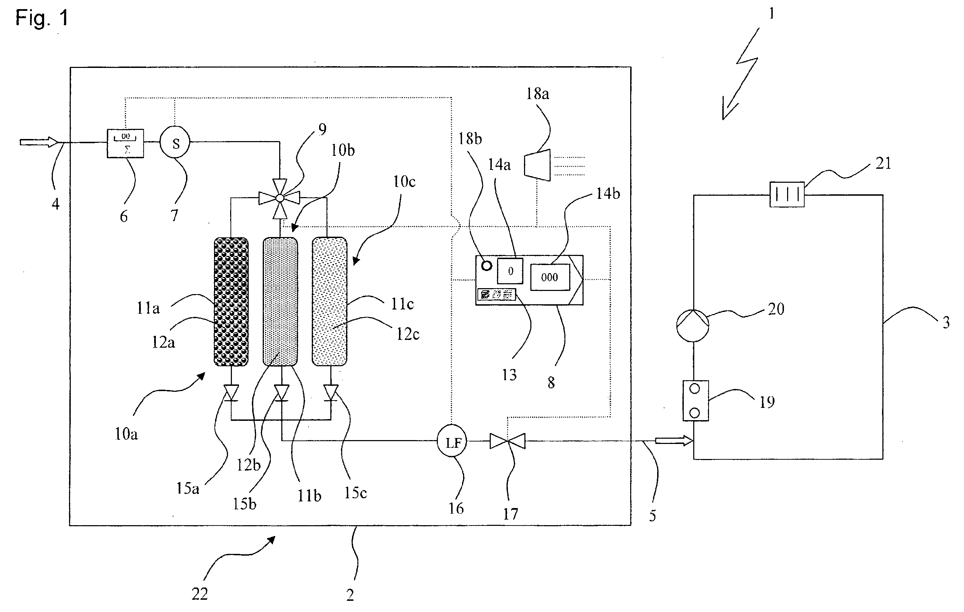

- Fig.1:: eine schematische Darstellung einer erfindungsgemäßen Wasserkreislaufanlage, bei der eine Wasserbehandlungs-Vorrichtung erfindungsgemäß verwendet wird.

Gemäß Fig. 1 weist eine Wasserkreislaufanlage 1 eine WasserbehandlungsVorrichtung 2 zur Behandlung von Zulaufwasser und einen Heizkreislauf 3 auf. Die Vorrichtung 2 ist über einen Zulauf 4 an ein lokales Wasserversorgungssystem, etwa das Trinkwassernetz, angeschlossen. Mittels eines Ablaufs 5 ist die Vorrichtung 2 mit dem Heizkreislauf 3 verbunden.

Das zu behandelnde Wasser passiert zunächst einen Durchflussmesser (Wasserzähler) 6, mit dem die Durchflussmenge des zu behandelnden und in den Heizkreislauf 3 fließenden Wassers bestimmt wird, sowie einen Zulaufsensor 7, der die Leitfähigkeit und/oder die Härte des zu behandelnden Wassers und gegebenenfalls auch den pH-Wert erfasst. Die dabei ermittelten Daten werden an eine Überwachungseichrichtung 8 weitergeleitet und von dieser ausgewertet.

Das zu behandelnde Wasser wird dann mittels eines hier als Vierwegehahn ausgebildeten Schaltmittels 9 in einen von drei Wasserbehandlungssträngen 10a, 10b, 10c geleitet. Während ein Wasserbehandlungsstrang 10a, 10b, 10c von zu behandeltem Wasser durchflossen wird, sind die anderen Wasserbehandlungsstränge 10a, 10b, 10c von dem zu behandelnden Wasser getrennt.

Jeder Wasserbehandlungsstrang 10a, 10b, 10c umfasst hier einen Behälter 11a, 11 b, 11 c, wobei jedem Wasserbehandlungsstrang 10a, 10b, 10c bzw. jedem Behälter 11a, 11 b, 11 c eine spezifische Wasserbehandlungsfunktion zugeordnet ist. Die Wasserbehandlungsfunktionen der einzelnen Wasserbehandlungsstränge 10a, 10b, 10c unterscheiden sich voneinander und werden durch Wasserbehandlungselemente 12a, 12b, 12c, die in den Behältern 11a, 11b, 11c angeordnet sind, realisiert. In der dargestellten Ausführungsform ist das Wasserbehandlungselement 12a des ersten Wasserbehandlungsstrangs 10a als eine Wasserenthärtungseinrichtung ausgebildet. Im zweiten Wasserbehandlungsstrang 10b ist das Wasserbehandlungselement 12b als eine Entsalzungseinrichtung ausgebildet. Der zweite Wasserbehandlungsstrang 10b leistet dadurch sowohl Enthärtung als auch Korrosionsschutz; er kann den ersten Wasserbehandlungsstrang 10a bei dessen Erschöpfung ersetzen, wenn auch bei höheren Betriebskosten. Der dritte Wasserbehandlungsstrang 10c weist hier eine Teilentsalzungseinrichtung nämlich einen Kationentauscher in H-Form als Wasserbehandlungselement 12c auf. Eine Enthärtungseinrichtung kann beispielsweise als Kationentauscher in Na-Form oder als eine Nanofiltrationsmembran ausgebildet sein. Eine Entsalzungseinrichtung kann beispielsweise durch eine Mischung aus Kationen- und Anionentauschern realisiert werden. Es ist auch möglich, in jedem Behälter 11 a, 11 b, 11 c noch jeweils einen Siebfilter als zusätzliches Wasserbehandlungselement vorzusehen (nicht dargestellt).

Welche Behandlung zum Einsatz kommt hängt von den Anforderungen ab, die im konkreten Fall durch das zu behandelnde Wasser und vor allem an das behandelte Wasser gestellt werden. Sind diese Anforderungen vor der Behandlung bestimmt worden und somit definiert, wird ein Behälter 11 a, 11 b, 11 c, der eine dementsprechende Wasserbehandlung ermöglicht, mit dem zu behandelnden Wasser verbunden. Dabei können insbesondere auch Kostenaspekte berücksichtigt werden, um eine besonders wirtschaftliche Wasserbehandlung auszuwählen.

Die Auswahl des Behälters 11a, 11 b, 11 c bzw. Wasserbehandlungsstrangs 12a, 12b, 12c erfolgt mittels des Vierwegehahns. Dieser kann entweder manuell oder mittels eines elektrischen Antriebs, der der Übersicht halber nicht dargestellt ist, betätigt werden. Die elektrische Betätigung des Vierwegehahns erfolgt mittels einer Eingabevorrichtung 13, die eine Auswahl des gewünschten Behälters 11 a, 11 b, 11 c ermöglicht. Diese Daten werden dann an die Überwachungseinrichtung 8 weitergeleitet, die den Vierwegehahn mittels Steuersignalen ansteuert. Eine Stranganzeige 14a informiert, welcher Behälter 11 a, 11 b, 11 c vom Wasser momentan durchströmt und somit welche Wasserbehandlung aktuell durchgeführt wird.

Nachdem das behandelte Wasser den Behälter 11 a, 11 b, 11 c verlassen hat, passiert es Sicherungen gegen Rückfließen 15a, 15b, 15c, die einen Rückfluss des behandelten Wassers in die Behälter 11 a, 11 b, 11 c verhindern. Das behandelte Wasser durchfließt weiter einen als Leitfähigkeitssensor ausgebildeten Ablaufsensor 16 und ein sich daran anschließendes Verschlussorgan 17, bevor es über den Ablauf 5 in den Heizkreislauf 3 eingeleitet wird.

Der Leitfähigkeitssensor überwacht die Leitfähigkeit des behandelten Wassers und übermittelt die dabei entstehenden Daten an die Überwachungseinrichtung 8. Das Verschlussorgan 17 ist mit der Überwachungseirichtung 8 verbunden und kann den Durchfluss des behandelten Wassers im Bereich des Ablaufs 5 unterbrechen.

Die Überwachungseinrichtung 8 berechnet, ausgehend von den ihr übermittelten Daten, die Restkapazität der Wasserbehandlungselemente 12a, 12b, 12c. Diese wird von einer Restkapazitätsanzeige 14b angezeigt. Darüber hinaus kann hier die Restkapazitätsanzeige 14b auch gemessene Durchflussmengen und Wasserparameter anzeigen.

Jedem Wasserbehandlungselement 12a, 12b, 12c ist eine vom Härtegrad bzw. Salzgehalt des zu behandelnden Wassers abhängige maximale Durchflussmenge oder Grundkapazität zugeordnet, bei der es erschöpft ist. Für das Berechnen der Restkapazität kann insbesondere wie folgt vorgegangen werden:
- Die Qualität des Wassers, insbesondere Härte und/oder Leitfähigkeit, wird geschätzt oder einmalig mit dem Zulaufsensor 7 bei Inbetriebnahme der Vorrichtung 2 gemessen und die Durchflussmenge durch die ausgewählten Behälter 11a, 11b, 11c wird mittels des Durchflussmessers 6 ermittelt.
- Die Qualität des Wassers, insbesondere Härte und/oder Leitfähigkeit, wird mittels des Zulaufsensors 7 kontinuierlich oder wiederholt bestimmt. Die Durchflussmenge durch die jeweiligen Behälter 11 a, 11 b, 11 c ermittelt der Durchflussmesser 6.

In beiden beschriebenen Fällen wird die ermittelte (je Wasserbehandlungsstrang 12a, 12b, 12c separat aufsummierte) Durchflussmenge mit der maximal möglichen Durchflussmenge eines jeden Behälters 11 a, 11 b, 11c verglichen; im Falle von wechselnden Qualitäten des zu behandelnden Wassers werden die jeweiligen Durchflussmengen, die zu einer bestimmtem Wasserqualität gehören, dabei entsprechend gewichtet.

Eine Überprüfung, ob die Wasserbehandlungsfunktion ausreichend erfüllt wird, kann auch anhand der Daten, die der Ablaufsensor 16 (hier Leitfähigkeitssensor) ermittelt, erfolgen. Hierzu vergleicht die Überwachungseinrichtung 8 die ermittelten Werte des Leitfähigkeitssensors mit einem vorher definierten Grenzwert. Ist beispielsweise das Wasserbehandlungselement 12b zur Entsalzung ausgewählt, und liegt der ermittelte Wert der Leitfähigkeit oberhalb des Grenzwertes, so ist die Wasserbehandlungsfunktion nicht mehr ausreichend gegeben und die Restkapazität ist erschöpft.

Ist die Restkapazität eines Behälters 11 a, 11 b, 11 c bzw. Wasserbehandlungsstrangs 10a, 10b, 10c erschöpft, betätigt die Überwachungseirichtung 8 einen akustischen Signalgeber 18a und/oder einen optischen Signalgeber 18b. Dadurch wird ein Benutzer darauf hingewiesen, dass eine Regeneration oder ein Austausch eines Wasserbehandlungselements 12a, 12b, 12c notwendig ist. Darüber hinaus kann mittels der Überwachungseinrichtung 8 das Vierwegeventil angesteuert werden, das einen anderen nicht erschöpften Behälter 11 a, 11 b, 11 c auswählt und den bisher ausgewählten erschöpften Behälter 11 a, 11 b, 11 c sperrt. Das zu behandelnde Wasser wird dann einer alternativen Wasserbehandlung unterzogen.

Zum Schutz des Heizkreislaufs 3 bzw. allgemein des zugehörigen Heizungssystems (hier eine Gebäudeheizung) vor nicht oder ungenügend behandeltem Füllwasser kann der Durchfluss durch einen der Behälter 11a, 11 b, 11 c mit erschöpften Wasserbehandlungselementen 12a, 12b, 12c mittels des Verschlussorgans 17 gesperrt werden.

Die erschöpften Wasserbehandlungselemente 12a, 12b, 12c werden ausgetauscht oder regeneriert. Die Regeneration kann mit einer entsprechenden (hier nicht abgebildeten) Regeneriermittel- oder Reinigungslösung durchgeführt werden; Regenerationseinrichtungen (insbesondere Vorratsgefäße für Regeneriermittel) können fester Bestandteil der Vorrichtung 2 sein. Ebenso kann die Regeneration an einer (hier ebenfalls nicht abgebildeten) separaten Regenerierstation durchgeführt werden.

Das behandelte Wasser fließt schließlich als Füllwasser in den Heizkreislauf 3, der hier einen Heizkessel 19, eine Umwälzpumpe 20 sowie mehrere Heizkörper 21 umfasst. Nach Befüllung des Heizkreislaufs 3 kann die Vorrichtung 2 abgetrennt werden, und der Heizkreislauf 3 wird dauerhaft mit dem eingefüllten, behandelten Wasser betrieben.

Sämtliche Komponenten der Vorrichtung 2 sind zu einer als Ganzes mobilen Behandlungsgruppe 22, beispielsweise auf einem Rollwagen, vereinigt. Die Vorrichtung 2 kann somit einfach und schnell von Einsatzort zu Einsatzort transportiert und flexibel eingesetzt werden. Je nach örtlich vorliegender Wasserqualität und Problemstellung kann das für die Befüllung des Heizungskreislaufs 3 benötigte Wasser durch den einen oder anderen Behälter 11 a, 11 b, 11 c geleitet und entsprechend behandelt werden. Probleme durch Steinbildung und Korrosion im Heizungskreislauf 3 werden vermieden.

### Bezugszeichenliste

- 1: Wasserkreislaufanlage
- 2: Vorrichtung zur Behandlung
- 3: Heizkreislauf
- 4: Zulauf
- 5: Ablauf
- 6: Durchflussmesser
- 7: Zulaufsensor
- 8: Überwachungseinrichtung
- 9: Schaltmittel
- 10a/b/c: Wasserbehandlungsstrang
- 11 a/b/c: Behälter
- 12a/b/c: Wasserbehandlungselement
- 13: Eingabevorrichtung
- 14a: Stranganzeige
- 14b: Restkapazitätsanzeige
- 15a/b/c: Sicherung gegen Rückfließen
- 16: Ablaufsensor
- 17: Verschlussorgan
- 18a: akustischer Signalgeber
- 18b: optischer Signalgeber
- 19: Heizkessel
- 20: Umwälzpumpe
- 21: Heizkörper
- 22: mobile Behandlungsgruppe

## Patentansprüche

1. Verwendung einer Wassei-behandlungs-Vorrichtung (2),
umfassend mehrere Wasserbehandlungsstränge (10a, 10b, 10c), mit denen zulaufendes Wasser einer Wasserbehandlungsfunktion unterzogen werden kann, wobei die Wasserbehandlungsstränge (10a, 10b, 10c) bezüglich des Flusses von zulaufendem Wasser parallel zueinander angeschlossen sind, und wobei Schaltmittel (9) vorhanden sind, mit denen ein Wasserbehandlungsstrang (10a, 10b, 10c) für eine Wasserbehandlung auswählbar ist, wobei die übrigen Wasserbehandlungsstränge (10a, 10b, 10c) für einen Wasserdurchfluss gesperrt sind,
**dadurch gekennzeichnet,**
**dass** die Vorrichtung (2) zur Behandlung von Zulaufwasser eines Wasserkreislaufs, mit dem der Wasserkreislauf befüllt wird, verwendet wird, wobei ein Wasserbehandlungsstrang (10a, 10b, 10c) von zu behandelndem Wasser durchflossen wird, und die übrigen Wasserbehandlungsstränge (10a, 10b, 10c) von dem zu behandelnden Wasser getrennt sind, und wobei jeder Wasserbehandlungsstrang (10a, 10b, 10c) eine unterschiedliche Wasserbehandlungsfunktion aufweist.

2. Verwendung nach Anspruch 1, **dadurch gekennzeichnet, dass** die Vorrichtung (2) als eine als Ganzes mobile Behandlungsgruppe (22) ausgebildet ist.

3. Verwendung nach einem der vorhergehenden Ansprüche, **dadurch gekennzeichnet, dass** jeder Wasserbehandlungsstrang (10a, 10b, 10c) ein oder mehrere Wasserbehandlungselemente (12a, 12b, 12c) aufweist, wobei jedes Wasserbehandlungselement (12a, 12b, 12c) eine Einzelfunktion zur Wasserbehandlung aufweist.

4. Verwendung nach Anspruch 3, **dadurch gekennzeichnet, dass** für jeden Wasserbehandlungsstrang (10a, 10b, 10c) ein eigener Behälter (11a, 11 b, 11 c) vorgesehen ist, in welchem alle Wasserbehandlungselemente (12a, 12b, 12c) des jeweiligen Wasserbehandlungsstranges (10a, 10b, 10c) angeordnet sind.

5. Verwendung nach Anspruch 3 oder 4, **dadurch gekennzeichnet, dass** ein oder mehrere Wasserbehandlungselemente (12a, 12b, 12c) ausgebildet sind als
- Siebfilter oder
- Enthärtungseinrichtung, insbesondere mit einem Kationentauscher in Na-Form oder mit einer Nanofiltrationsmembran, oder
- Entsalzungseinrichtung, insbesondere mit einer Umkehrosmosemembran oder einer Mischung aus Kationen- und Anionentauschern, oder
- Teilentsalzungseinrichtung, insbesondere mit einem Kationentauscher in H-Form, oder
- pH-Puffereinrichtung, oder
- Inhibitordosiereinrichtung.

6. Verwendung nach einem der vorhergehenden Ansprüche, **dadurch gekennzeichnet, dass** mindestens ein Durchflussmesser (6) zur Bestimmung des Flusses an behandeltem Wasser vorgesehen ist.

7. Verwendung nach einem der vorhergehenden Ansprüche, **dadurch gekennzeichnet, dass** ein Zulaufsensor (7) im Bereich eines Zulaufs (4) der Vorrichtung (2) zur Messung der Leitfähigkeit und/oder der Härte des zu behandelnden Wassers vorgesehen ist.

8. Verwendung nach einem der vorhergehenden Ansprüche, **dadurch gekennzeichnet, dass** ein Ablaufsensor (16) im Bereich des Ablaufs (5) der Vorrichtung (2) zur Messung der Leitfähigkeit und/oder der Härte des behandelten Wassers vorgesehen ist.

9. Verwendung nach einem der vorhergehenden Ansprüche, **dadurch gekennzeichnet, dass** ein Verschlussorgan (17) zur Unterbrechung des Abflusses von behandeltem Wasser vorgesehen ist.

10. Verwendung nach einem der vorhergehenden Ansprüche, **dadurch gekennzeichnet, dass** eine Überwachungseinrichtung (8) zur Überwachung der Restkapazität eines oder mehrerer der Wasserbehandlungsstränge (10a, 10b, 10c) vorgesehen ist, insbesondere wobei eine Restkapazitätsanzeige (14b) für einen oder mehrere der Wasserbehandlungsstränge (10a, 10b, 10c) vorgesehen ist.

11. Verwendung nach Anspruch 10, **dadurch gekennzeichnet, dass** ein Signalgeber (18a, 18b), insbesondere ein akustischer Signalgeber (18a) und/oder optischer Signalgeber (18b) und/oder Funksignalgeber vorgesehen ist zum Signalisieren der Erschöpfung der Restkapazität eines Wasserbehandlungsstranges (10a, 10b, 10c).

12. Verwendung nach Anspruch 10 oder 11, wobei mittels der Überwachungseinrichtung (8) die Restkapazität eines oder mehrerer der Wasserbehandlungsstränge (10a, 10b, 10c) überwacht wird.

13. Verwendung nach Anspruch 12, **dadurch gekennzeichnet, dass** bei Erschöpfung der Restkapazität in einem ausgewählten Wasserbehandlungsstrang (10a, 10b, 10c) durch die Überwachungseinrichtung (8) der bisherige Wasserbehandlungsstrang (10a, 10b, 10c) gesperrt wird und ein anderer, nicht erschöpfter Wasserbehandlungsstrang (10a, 10b, 10c) ausgewählt wird.

14. Verwendung nach Anspruch 12 oder 13, **dadurch gekennzeichnet, dass** bei Erschöpfung der Restkapazität in einem ausgewählten Wasserbehändlungsstrang (10a, 10b, 10c) durch die Überwachungseinrichtung (8) der Wasserffuss durch diesen Wasserbehandlungsstrang (10a, 10b, 10c), und bevorzugt auch durch die gesamte Vorrichtung (2), unterbrochen wird.

15. Verwendung nach einem der vorhergehenden Ansprüche, **dadurch gekennzeichnet, dass** der Wasserkreislauf ein Kühl- oder Heizkreislauf (3) ist.

## Claims

1. The use of a water treatment device (2), comprising a plurality of water treatment lines (10a, 10b, 10c) with which influent water can be subjected to a water treatment function, wherein the water treatment lines (10a, 10b, 10c) are connected parallel to one another with respect to the flow of influent water, and wherein switching means (9) are provided with which a water treatment line (10a, 10b, 10c) can be selected for water treatment, wherein the other water treatment lines (10a, 10b, 10c) are blocked for a water flow,
**characterized in that**
the device (2) is used for treating influent water of a water cycle, with which the water cycle is filled, wherein water to be treated flows through a water treatment line (10a, 10b, 10c) and the other water treatment lines (10a, 10b, 10c) are separated from the water to be treated, and wherein each water treatment line (10a, 10b, 10c) has a different water treatment function.

2. The use according to claim 1, **characterized in that** the device (2) is designed in the form of a treatment group (22) which is movable as a whole.

3. The use according to any one of the preceding claims, **characterized in that** each water treatment line (10a, 10b, 10c) has one or a plurality of water treatment elements (12a, 12b, 12c), wherein each water treatment element (12a, 12b, 12c) has an individual water treatment function.

4. The use according to claim 3, **characterized in that** each water treatment line (10a, 10b, 10c) is provided with its own container (11a, 11b, 11c), in which all water treatment elements (12a, 12b, 12c) of the respective water treatment line (10a, 10b, 10c) are arranged.

5. The use according to claim 3 or 4, **characterized in that** one or a plurality of water treatment elements (12a, 12b, 12c) are designed as
- sieve filter or
- softening device, in particular, with a cation exchanger in the form of Na or with a nano filtration diaphragm, or
- desalination device, in particular, with a reverse osmosis diaphragm or a mixture of cation and anion exchangers, or
- partial desalination device, in particular, with a cation exchanger of H type, or
- ph buffer device or
- inhibitor metering device.

6. The use according to any one of the preceding claims, **characterized in that** at least one flow meter (6) is provided for determining the flow of treated water.

7. The use according to any one of the preceding claims, **characterized in that** an inflow sensor (7) is provided in the area of an inlet (4) of the device (2) for measuring the conductivity and/or the hardness of the water to be treated.

8. The use according to any one of the preceding claims, **characterized in that** a discharge sensor (16) is provided in the area of the outlet (5) of the device (2) for measuring the conductivity and/or the hardness of the treated water.

9. The use according to any one of the preceding claims, **characterized in that** a closure element (17) is provided for interrupting the outflow of treated water.

10. The use according to any one of the preceding claims, **characterized in that** a monitoring device (8) is provided for monitoring the residual capacity of one or a plurality of the water treatment lines (10a, 10b, 10c), in particular, wherein a residual capacity display (14b) is provided for one or a plurality of the water treatment lines (10a, 10b, 10c).

11. The use according to claim 10, **characterized in that** a signalling device (18a, 18b), in particular an acoustic signalling device (18a) and/or optical signalling device (18b) and/or radio signal transmitter, are provided for signalling depletion of the residual capacity of a water treatment line (10a, 10b, 10c).

12. The use according to claim 10 or 11, wherein the monitoring device (8) monitors the residual capacity of one or a plurality of the water treatment lines (10a, 10b, 10c).

13. The use according to claim 12, **characterized in that** upon depletion of the residual capacity in a selected water treatment line (10a, 10b, 10c), the monitoring device (8) blocks the water treatment line (10a, 10b, 10c) used up to then and selects another non-depleted water treatment line (10a, 10b, 10c).

14. The use according to claim 12 or 13, **characterized in that** upon depletion of the residual capacity in a selected water treatment line (10a, 10b, 10c), the monitoring device (8) interrupts the water flow through this water treatment line (10a, 10b, 10c) and preferably also through the overall device (2).

15. The use according to any one of the preceding claims, **characterized in that** the water cycle is a cooling or a heating cycle (3).

## Revendications

1. Utilisation d'un dispositif (2) de traitement d'eau composé de plusieurs segments (10a, 10b, 10c) de traitement d'eau, par lesquels de l'eau entrante peut être soumise à une fonction de traitement d'eau, lesdits segments (10a, 10b, 10c) de traitement d'eau étant raccordés parallèlement les uns aux autres par rapport au flux d'eau entrante, avec présence de moyens de commutation (9) par lesquels un segment (10a, 10b, 10c) de traitement d'eau peut être sélectionné pour un traitement d'eau, un écoulement d'eau, par les autres segments (10a, 10b, 10c) de traitement d'eau, étant alors bloqué,
**caractérisée par**
l'emploi du dispositif (2) pour le traitement d'eau entrante d'un circuit d'eau, par laquelle ledit circuit d'eau est empli, sachant qu'un segment (10a, 10b, 10c) de traitement d'eau est alors parcouru par de l'eau à traiter, que les autres segments (10a, 10b, 10c) de traitement d'eau sont séparés d'avec l'eau à traiter, et que chaque segment (10a, 10b, 10c) de traitement d'eau exerce une fonction de traitement d'eau différente.

2. Utilisation selon la revendication 1, **caractérisée par le fait que** le dispositif (2) est réalisé sous la forme d'un groupe de traitement (22) mobile en tant qu'ensemble unitaire.

3. Utilisation selon l'une des revendications précédentes, **caractérisée par le fait que** chaque segment (10a, 10b, 10c) de traitement d'eau comporte un ou plusieurs élément(s) (12a, 12b, 12c) de traitement d'eau, chaque élément (12a, 12b, 12c) de traitement d'eau exerçant alors une unique fonction dévolue au traitement d'eau.

4. Utilisation selon la revendication 3, **caractérisée par le fait qu'**il est prévu, pour chaque segment (10a, 10b, 10c) de traitement d'eau, un propre réceptacle (11a, 11b, 11c) dans lequel sont disposés tous les éléments (12a, 12b, 12c) de traitement d'eau du segment considéré (10a, 10b, 10c) de traitement d'eau.

5. Utilisation selon la revendication 3 ou 4, **caractérisée par le fait qu'**un ou plusieurs élément(s) (12a, 12b, 12c) de traitement d'eau est (sont) réalisé(s) en tant que
- filtre à tamis ou
- dispositif adoucisseur équipé, en particulier, d'un échangeur de cations sous forme Na, ou d'une membrane de nanofiltration, ou
- dispositif de dessalement équipé, en particulier, d'une membrane d'osmose inverse ou d'une combinaison d'échangeurs de cations et d'anions, ou
- dispositif de dessalement partiel équipé, en particulier, d'un échangeur de cations sous forme H, ou
- dispositif à tampon de pH, ou
- dispositif de dosage d'inhibiteurs.

6. Utilisation selon l'une des revendications précédentes, **caractérisée par le fait qu'**au moins un débitmètre (6) est prévu pour la détermination du flux d'eau traitée.

7. Utilisation selon l'une des revendications précédentes, **caractérisée par le fait qu'**un détecteur d'afflux (7) est prévu dans la région d'une arrivée (4) du dispositif (2), afin de mesurer la conductivité et/ou la dureté de l'eau à traiter.

8. Utilisation selon l'une des revendications précédentes, **caractérisée par le fait qu'**un détecteur (16) d'écoulements sortants est prévu dans la région de la sortie (5) du dispositif (2), afin de mesurer la conductivité et/ou la dureté de l'eau traitée.

9. Utilisation selon l'une des revendications précédentes, **caractérisée par le fait qu'**un organe d'obturation (17) est prévu pour interrompre le flux de sortie d'eau traitée.

10. Utilisation selon l'une des revendications précédentes, **caractérisée par le fait qu'**un dispositif de surveillance (8) est prévu pour surveiller la capacité restante de l'un ou plusieurs des segments (10a, 10b, 10c) de traitement d'eau, un affichage (14b) de capacités restantes étant notamment prévu pour l'un ou plusieurs desdits segments (10a, 10b, 10c) de traitement d'eau.

11. Utilisation selon la revendication 10, **caractérisée par le fait qu'**un générateur (18a, 18b) de signaux, en particulier un générateur acoustique (18a) de signaux et/ou un générateur optique (18b) de signaux et/ou un générateur de signaux radio, est prévu pour signaler l'épuisement de la capacité restante d'un segment (10a, 10b, 10c) de traitement d'eau.

12. Utilisation selon la revendication 10 ou 11, la capacité restante de l'un ou plusieurs des segments (10a, 10b, 10c) de traitement d'eau étant surveillée au moyen du dispositif de surveillance (8).

13. Utilisation selon la revendication 12, **caractérisée par le fait qu'**en cas d'épuisement de la capacité restante dans un segment sélectionné (10a, 10b, 10c) de traitement d'eau, le dispositif de surveillance (8) a pour effets d'isoler l'ancien segment (10a, 10b, 10c) de traitement d'eau et de sélectionner un autre segment (10a, 10b, 10c) de traitement d'eau, non épuisé.

14. Utilisation selon la revendication 12 ou 13, **caractérisée par le fait qu'**en cas d'épuisement de la capacité restante dans un segment sélectionné (10a, 10b, 10c) de traitement d'eau, le dispositif de surveillance (8) a pour effet d'interrompre le flux d'eau en circulation dans ce segment (10a, 10b, 10c) de traitement d'eau et, de préférence également, dans l'intégralité du dispositif (2).

15. Utilisation selon l'une des revendications précédentes, **caractérisée par le fait que** le circuit d'eau est un circuit de refroidissement ou de chauffage (3).
